# EUROPEAN PATENT APPLICATION

(11) **EP 4 506 962 A1**
(43) Date of publication of application: **12.02.2025**
(21) Application number: 23784901.3
(22) Date of filing: 28.03.2023
(51) Int. Cl.: G21F 9/00, G21F 9/06

(54) **METHOD FOR CONTROLLING DECONTAMINATION OF HEAVY WATER NUCLEAR POWER PLANT SYSTEM**

(30) Priority: 05.04.2022 KR 20220042255
(71) Applicant: Korea Hydro & Nuclear Power Co., Ltd, Gyeongju-si, Gyeongsangbuk-do 38120 (KR)
(72) Inventor: KIM, Cho Rong, Daejeon 34014 (KR); KIM, Hak Soo, Sejong 30146 (KR); KIM, Jeong Ju, Gyeryong-si Chungcheongnam-do 32806 (KR); CHOI, Jin Soo, Daejeon 34090 (KR); LEE, Kyung Hee, Daejeon 34187 (KR)
(74) Representative: Glawe, Delfs, Moll
(86) International application number: PCT/KR2023/004098
(87) International publication number: WO 2023/195673

(57) **Abstract**

A flow rate formation method for system decontamination of a heavy-water reactor nuclear power plant is provided. A nuclear power plant includes: a reactor; a first coolant pump disposed on one side of the reactor, a second coolant pump disposed on the other side of the reactor, and first coolant system piping passing through the reactor and connecting the first coolant pump and the second coolant pump; a first shutdown cooling pump disposed on one side of the reactor, and first shutdown cooling system piping branching from the first coolant system piping at a downstream end of the first coolant pump and connected to an upstream end of the first coolant pump through the first shutdown cooling pump; and a second shutdown cooling pump disposed on the other side of the reactor, and second shutdown cooling system piping branching from the first coolant system piping at a downstream end of the second coolant pump and connected to an upstream end of the second coolant pump through the second shutdown cooling pump, wherein the first coolant system piping, the first shutdown cooling system piping, and the second shutdown cooling system piping are decontaminated simultaneously by operating the first coolant pump and the second shutdown cooling pump and stopping the second coolant pump and the first shutdown cooling pump.

## Description

### [TECHNICAL FIELD]

The present invention relates to a system decontamination operating method for a heavy-water reactor.

### [BACKGROUND ART]

System decontamination refers to the decontamination of Reactor Coolant System (RCS) piping composed of waste paths located within the containment building of a nuclear power plant, conducted with the goals of reducing radiation exposure to radiation workers during the decommission of the nuclear power plant, preventing contamination spread, and reestablishing the classification standards for radioactive waste. Specifically, system decontamination involves operating pumps connected to reactor coolant piping to circulate a decontamination solution (i.e., a high-concentration chemical solution containing chemical decontaminants) along the reactor coolant piping. The decontamination solution can reduce radiation levels by detaching radioactive materials and oxides included in the oxide film inside the coolant piping.

### [TECHNICAL PROBLEMS]

Meanwhile, for a light-water reactor, the primary systems selected for decontamination include the coolant system, chemical and volume control system, and shutdown cooling system. To establish circulation and purification flow rates within the decontamination range, a reactor coolant pump (for the circulation flow rate) and a residual heat removal pump (for the purification flow rate) can be operated simultaneously.

On the other hand, in a heavy-water reactor, unlike in the light-water reactor, the primary systems, the coolant system and the moderator system, are physically separated. Therefore, the same flow rate formation method used in the light-water reactor cannot be applied to the heavy-water reactor.

The problem that the present invention aims to solve is to provide a flow rate formation method for system decontamination of a heavy-water reactor.

The objectives of the present invention are not limited to the aforementioned issues, and other unstated objectives will become apparent to those skilled in the art from the following descriptions.

### [TECHNICAL SOLUTIONS]

A nuclear power plant according to an aspect of the present invention for achieving the above objective a reactor includes; a first coolant pump disposed on one side of the reactor, a second coolant pump disposed on the other side of the reactor, and first coolant system piping passing through the reactor and connecting the first coolant pump and the second coolant pump; a first shutdown cooling pump disposed on one side of the reactor, and first shutdown cooling system piping branching from the first coolant system piping at a downstream end of the first coolant pump and connected to an upstream end of the first coolant pump through the first shutdown cooling pump; and a second shutdown cooling pump disposed on the other side of the reactor, and second shutdown cooling system piping branching from the first coolant system piping at a downstream end of the second coolant pump and connected to an upstream end of the second coolant pump through the second shutdown cooling pump, wherein the first coolant system piping, the first shutdown cooling system piping, and the second shutdown cooling system piping are decontaminated simultaneously by operating the first coolant pump and the second shutdown cooling pump and stopping the second coolant pump and the first shutdown cooling pump.

The nuclear power plant may further include: a waste liquid decomposition device, and first coolant purification system piping branching from the first shutdown cooling system piping at the downstream end of the first coolant pump and connected to the upstream end of the first coolant pump through the waste liquid decomposition device, wherein the first coolant system piping, the first shutdown cooling system piping, the second shutdown cooling system piping, and the first coolant purification system piping are decontaminated simultaneously by operating the first coolant pump and the second shutdown cooling pump and stopping the second coolant pump and the first shutdown cooling pump.

A flow rate within the first coolant purification system piping is formed by a head of the first coolant pump.

The nuclear power plant may include: a third coolant pump disposed on one side of the reactor, a fourth coolant pump disposed on the other side of the reactor, and second coolant system piping passing through the reactor and connecting the third coolant pump and the fourth coolant pump; third shutdown cooling system piping branching from the second coolant system piping at a downstream end of the third coolant pump and connected to an upstream end of the third coolant pump through the first shutdown cooling pump; and fourth shutdown cooling system piping branching from the second coolant system piping at a downstream end of the fourth coolant pump and connected to an upstream end of the fourth coolant pump through the second shutdown cooling pump.

A nuclear power plant according to another aspect of the present invention for achieving the above objective includes: a reactor; a first coolant pump disposed on one side of the reactor, a second coolant pump disposed on the other side of the reactor, and first coolant system piping passing through the reactor and connecting the first coolant pump and the second coolant pump; a first shutdown cooling pump disposed on one side of the reactor, and first shutdown cooling system piping branching from the first coolant system piping at a downstream end of the first coolant pump and connected to an upstream end of the first coolant pump through the first shutdown cooling pump; a second shutdown cooling pump disposed on the other side of the reactor, and second shutdown cooling system piping branching from the first coolant system piping at a downstream end of the second coolant pump and connected to an upstream end of the second coolant pump through the second shutdown cooling pump; and a waste liquid decomposition device, and first coolant purification system piping branching from the first shutdown cooling system piping at the downstream end of the first coolant pump and connected to the upstream end of the first coolant pump through the waste liquid decomposition device, wherein the first coolant system piping, the first shutdown cooling system piping, the second shutdown cooling system piping, and the first coolant purification system piping are decontaminated simultaneously by operating the second coolant pump and the first shutdown cooling pump and stopping the first coolant pump and the second shutdown cooling pump.

A flow rate within the first coolant purification system piping may be formed by a head of the first shutdown cooling pump.

A decontamination method for a nuclear power plant, according to another aspect of the present invention for achieving the above objective, includes: providing the nuclear power plant, the nuclear power plant including: a reactor, a first coolant pump disposed on one side of the reactor, a second coolant pump disposed on the other side of the reactor, and first coolant system piping passing through the reactor and connecting the first coolant pump and the second coolant pump; a first shutdown cooling pump disposed on one side of the reactor, and first shutdown cooling system piping branching from the first coolant system piping at a downstream end of the first coolant pump and connected to an upstream end of the first coolant pump through the first shutdown cooling pump; and a second shutdown cooling pump disposed on the other side of the reactor, and second shutdown cooling system piping branching from the first coolant system piping at a downstream end of the second coolant pump and connected to an upstream end of the second coolant pump through the second shutdown cooling pump, wherein the first coolant system piping, the first shutdown cooling system piping, the second shutdown cooling system piping, and the first coolant purification system piping are decontaminated simultaneously by operating the first coolant pump and the second shutdown cooling pump and stopping the second coolant pump and the first shutdown cooling pump.

A flow rate within the first coolant purification system piping is formed by a head of the first coolant pump.

The nuclear power plant may further include a waste liquid decomposition device, and first coolant purification system piping branching from the first shutdown cooling system piping at the downstream end of the first coolant pump and connected to the upstream end of the first coolant pump through the waste liquid decomposition device, and the first coolant system piping, the first shutdown cooling system piping, the second shutdown cooling system piping, and the first coolant purification system piping may be decontaminated simultaneously by operating the first coolant pump and the second shutdown cooling pump and stopping the second coolant pump and the first shutdown cooling pump.

When the first coolant pump and the second shutdown cooling pump are operated, the flow rate within the first coolant purification system piping may be formed by the head of the first coolant pump. When the second coolant pump and the first shutdown cooling pump are operated, the flow rate within the first coolant purification system piping may be formed by the head of the first shutdown cooling pump.

Specific details of other embodiments are included in the detailed description and drawings.

### [ADVANTAGEOUS EFFECTS]

A nuclear power plant according to some embodiments of the present invention has one or more effects as follows.

The nuclear power plant according to some embodiments of the present invention can operate a coolant pump and a residual heat removal pump simultaneously to perform full decontamination, not partial decontamination by loop.

### [BRIEF DESCRIPTION OF DRAWINGS]

FIG. 1 is a diagram for explaining the system piping of a heavy-water reactor according to some embodiments of the present invention.
FIG. 2 is a diagram for explaining a system decontamination operating method for a heavy-water reactor according to an embodiment of the present invention.
FIG. 3 is a diagram for explaining a system decontamination operating method for a heavy-water reactor according to another embodiment of the present invention.
FIG. 4 is a diagram for explaining a system decontamination operating method for a heavy-water reactor according to yet another embodiment of the present invention.
FIG. 5 is a diagram for explaining a system decontamination operating method for a heavy-water reactor according to still another embodiment of the present invention.
FIG. 6 is a flowchart for explaining a decontamination method according to some embodiments of the present invention.

### [MODES FOR CARRYING OUT THE INVENTION]

Preferred embodiments of the present invention will hereinafter be described in detail with reference to the accompanying drawings. The advantages and features of the present invention, and methods for achieving them, will become apparent with reference to the embodiments described below in detail along with the accompanying drawings. However, the present invention is not limited to the embodiments disclosed herein but can be implemented in various other forms. These embodiments are provided to make the disclosure of the present invention thorough and to fully convey the scope of the invention to those skilled in the art, and the present invention is defined only by the scope of the claims. Throughout the specification, the same reference numerals refer to the same components.

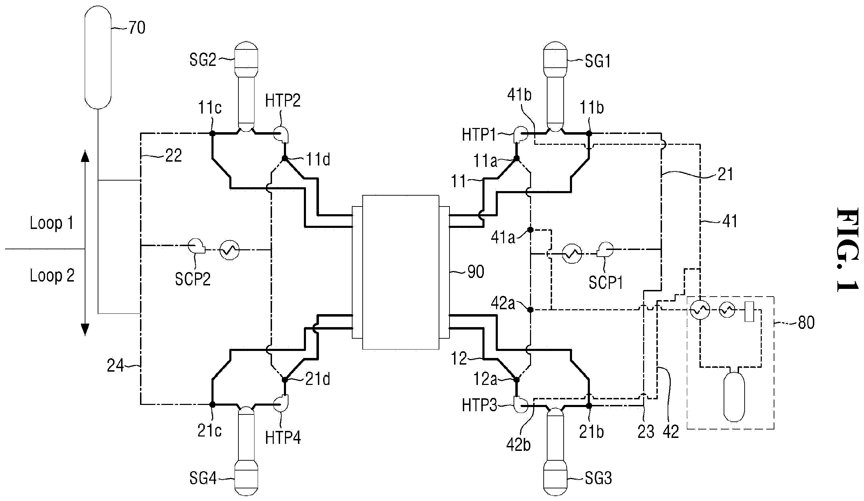

FIG. 1 is a diagram for explaining the system piping (or system flow path) of a nuclear power plant according to some embodiments of the present invention.

Referring to FIG. 1, for ease of understanding, coolant system piping (11 and 12) is indicated by thick lines, shutdown cooling system piping (21, 22, 23, and 24) is indicated by dashed-dotted lines, and coolant purification system piping (41 and 42) is indicated by dashed lines.

The system piping of a heavy-water reactor includes four coolant pumps, i.e., first, second, third, and fourth coolant pumps HTP1, HTP2, HTP3, and HTP4, and two shutdown cooling pumps, i.e., first and second shutdown cooling pumps SCP1 and SCP2.

Specifically, the first coolant pump HTP1 is disposed on one side of a reactor 90 (e.g., the right side in FIG. 1), and the second coolant pump HTP2 is disposed on the other side of the reactor 90 (e.g., the left side in FIG. 1). The first steam generator SG1 is disposed on one side of the reactor 90, and the second steam generator SG2 is disposed on the other side of the reactor 90. First coolant system piping 11 runs through the reactor 90 and connects the first coolant pump HTP1, the second coolant pump HTP2, the first steam generator SG1, and the second steam generator SG2.

The third coolant pump HTP3 is disposed on one side of the reactor 90 (e.g., the right side in FIG. 1), and the fourth coolant pump HTP4 is disposed on the other side of the reactor 90 (e.g., the left side in FIG. 1). The third steam generator SG3 is disposed on one side of the reactor 90, and the fourth steam generator SG4 is disposed on the other side of the reactor 90. Second coolant system piping 12 runs through the reactor 90 and connects the third coolant pump HTP3, the fourth coolant pump HTP4, the third steam generator SG3, and the fourth steam generator SG4.

The first shutdown cooling pump SCP1 is disposed on one side of the reactor 90 (e.g., the right side in FIG. 1). First shutdown cooling system piping 21 is connected to the first coolant system piping 11. Specifically, the first shutdown cooling system piping 21 branches from the first coolant system piping 11 at a downstream end 11a of the first coolant pump HTP1 and is connected through the first shutdown cooling pump SCP1 to an upstream end 11b of the first coolant pump HTP1.

The second shutdown cooling pump SCP2 is disposed on the other side of the reactor 90 (e.g., the left side in FIG. 1). The second shutdown cooling system piping 22 is connected to the first coolant system piping 11. Specifically, the second shutdown cooling system piping 22 branches from the first coolant system piping 11 at a downstream end 11d of the second coolant pump HTP2 and is connected through the second shutdown cooling pump SCP2 to an upstream end 11c of the second coolant pump HTP2.

Additionally, third shutdown cooling system piping 23 branches from the second coolant system piping 12 at a downstream end 12a of the third coolant pump HTP3 and is connected through the first shutdown cooling pump SCP1 to an upstream end 12b of the third coolant pump HTP3.

That is, the first shutdown cooling system piping 21 and the third shutdown cooling system piping 23 share the first shutdown cooling pump SCP1.

Furthermore, fourth shutdown cooling system piping 24 branches from the second coolant system piping 12 at a downstream end 12d of the fourth coolant pump HTP4 and is connected through the second shutdown cooling pump SCP2 to an upstream end 12c of the fourth coolant pump HTP4.

In other words, the second shutdown cooling system piping 22 and the fourth shutdown cooling system piping 24 share the second shutdown cooling pump SCP2.

Meanwhile, a waste liquid decomposition device 80 is connected to the first coolant system piping 11 through first coolant purification system piping 41. Specifically, the first coolant purification system piping 41 branches from the first shutdown cooling system piping 21 (refer to reference numeral 41a) and is connected through the waste liquid decomposition device 80 to an upstream end 41b of the first coolant pump HTP1.

Additionally, the waste liquid decomposition device 80 is connected to the second coolant system piping 12 through second coolant purification system piping 42. Specifically, the second coolant purification system piping 42 branches from third shutdown cooling system piping 23 (refer to reference numeral 42a) and is connected through the waste liquid decomposition device 80 to an upstream end 42b of the third coolant pump HTP3.

Reference numeral 70 denotes a pressurizer.

System decontamination is operated by being divided into a first loop Loop1 and a second loop Loop2.

According to some embodiments of the present invention, when decontaminating the first loop Loop1, the first coolant system piping 11, the first shutdown cooling system piping 21, the second shutdown cooling system piping 22, and the first coolant purification system piping 41 are decontaminated. In other words, all the system piping (11, 21, 22, and 41) of the first loop Loop1 is decontaminated simultaneously, rather than decontaminating any one or two of the first coolant system piping 11, the first shutdown cooling system piping 21, the second shutdown cooling system piping 22, and the first coolant purification system piping 41.

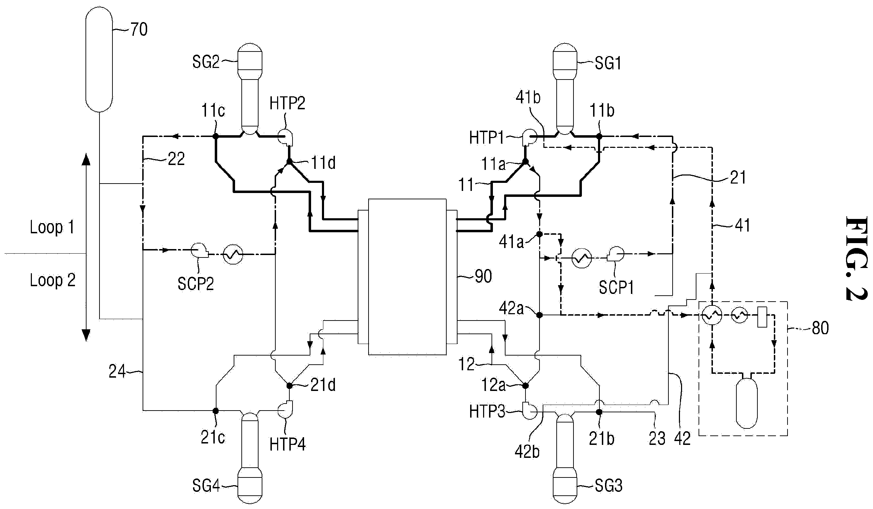

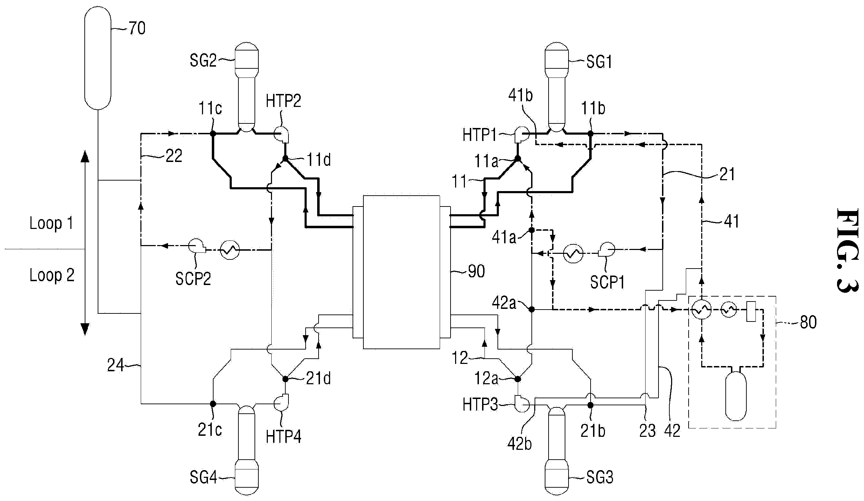

To decontaminate the first loop Loop1, the first coolant pump HTP1 and the second shutdown cooling pump SCP2 may be operated, while the second coolant pump HTP2 and the first shutdown cooling pump SCP1 may be stopped. Alternatively, the second coolant pump HTP2 and the first shutdown cooling pump SCP1 may be operated, while the first coolant pump HTP1 and the second shutdown cooling pump SCP2 may be stopped. The reason for this operation will be explained later in further detail with reference to FIGS. 2 and 3.

According to some embodiments of the present invention, when decontaminating the second loop Loop2, the second coolant system piping 12, the third shutdown cooling system piping 23, the fourth shutdown cooling system piping 24, and the second coolant purification system piping 42 are decontaminated. In other words, all the system piping (12, 23, 24, and 42) of the second loop Loop2 is decontaminated simultaneously, rather than decontaminating any one or two of the second coolant system piping 12, the third shutdown cooling system piping 23, the fourth shutdown cooling system piping 24, and the second coolant purification system piping 42.

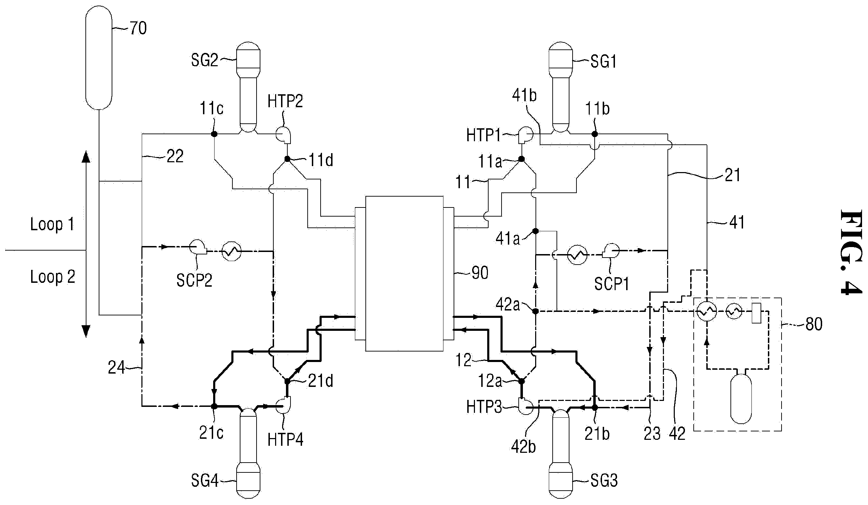

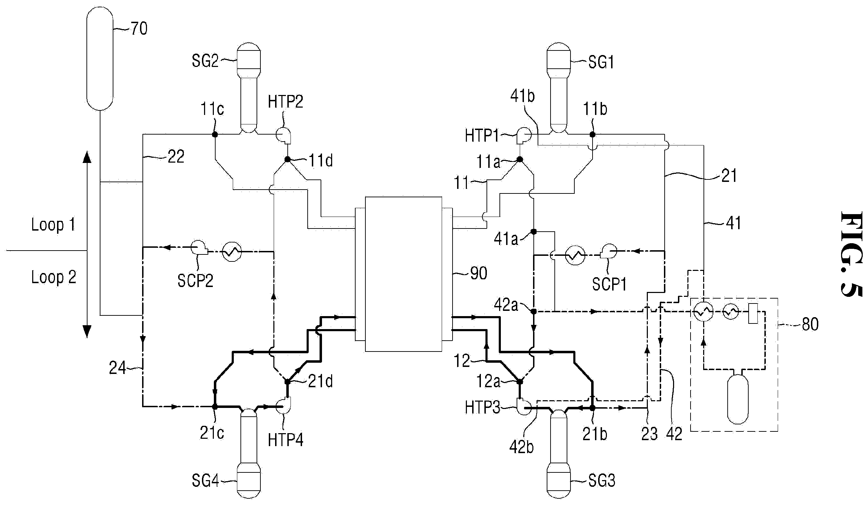

To decontaminate the second loop Loop2, the third coolant pump HTP3 and the second shutdown cooling pump SCP2 may be operated, while the fourth coolant pump HTP4 and the first shutdown cooling pump SCP1 may be stopped. Alternatively, the fourth coolant pump HTP4 and the first shutdown cooling pump SCP1 may be operated, while the third coolant pump HTP3 and the second shutdown cooling pump SCP2 may be stopped. The reason for this operation will be explained later in further detail with reference to FIGS. 4 and 5.

During normal operation, the coolant pumps HTP1, HTP2, HTP3, and HTP4 and the shutdown cooling pumps SCP1 and SCP2 do not operate simultaneously. In other words, after all the coolant pumps HTP1, HTP2, HTP3, and HTP4 have been operated and stopped, the shutdown cooling pumps SCP1 and SCP2 are operated.

However, during system decontamination operation, due to the efficiency of system decontamination and the aforementioned piping connection structure, the coolant pumps (e.g., HTP1) and the shutdown cooling pumps (e.g., SCP2) are operated simultaneously. This operation will be explained later in further detail with reference to FIGS. 2 through 5.

FIG. 2 is a diagram for explaining a decontamination method for a nuclear power plant according to an embodiment of the present invention. FIG. 2 explains the decontamination of all the system piping (11, 21, 22, and 41) of the first loop Loop1.

Referring to FIG. 2, to decontaminate the first loop Loop1, the first coolant pump HTP1 and the second shutdown cooling pump SCP2 are operated.

Since the discharge pressure of the first coolant pump HTP1 is higher than the discharge pressure of the first shutdown cooling pump SCP1, forming a reverse flow path, the first shutdown cooling pump SCP1 is not operated while the first coolant pump HTP1 is in operation. However, since the second shutdown cooling pump SCP2, which is farther from the first coolant pump HTP1, has a discharge pressure relatively higher than the coolant pump discharge pressure, forming a forward flow path, the second shutdown cooling pump SCP2 is operated while the first coolant pump HTP1 is in operation.

When the first coolant pump HTP1 and the second shutdown cooling pump SCP2 are operated, the following flow paths are formed. In the description below, symbols ①, ①-1, ①-2, ②, ②-1, and ②-2 are added to distinguish the decontaminant branched at each junction point.

The decontaminant flows from the first coolant pump HTP1 to the junction point 11a.

At the junction point 11a, some of the decontaminant, ①, flows through the reactor 90 to the junction point 11c. Some of the decontaminant, ②, flows to the first shutdown cooling system piping 21 from the junction point 11a. Some of the decontaminant ① that reaches the junction point 11c, ①-1 flows toward the second steam generator SG2, and through the reactor 90 to the junction point 11b.

On the other hand, some of the decontaminant at the junction point 11c, ①-2, flows to the second shutdown cooling system piping 22, and through the second shutdown cooling pump SCP2 to the junction point 11d. It then flows through the reactor 90 to the junction point 11b and the first coolant pump HTP1.

Additionally, the decontaminant branched from the junction point 11a, ②, reaches the junction point 41a, where some of this decontaminant, ②-1, flows through the first shutdown cooling pump SCP1 to the junction point 11b and to the first coolant pump HTP1. Some of the decontaminant at the junction point 41a, ②-2, flows through the first coolant purification system piping 41 and the waste liquid decomposition device 80 to the junction point 41b and the first coolant pump HTP1. At this time, the purification flow rate is formed using the head of the first coolant pump HTP1.

FIG. 3 is a diagram for explaining a decontamination method for a nuclear power plant according to another embodiment of the present invention. FIG. 3 explains the decontamination of all the system piping (11, 21, 22, and 41) of the first loop Loop1.

Referring to FIG. 3, to decontaminate the first loop Loop1, the second coolant pump HTP2 and the first shutdown cooling pump SCP1 are operated.

Since the discharge pressure of the second coolant pump HTP2 is higher than the discharge pressure of the second shutdown cooling pump SCP2, forming a reverse flow path, the second shutdown cooling pump SCP2 is not operated while the second coolant pump HTP2 is in operation. However, since the first shutdown cooling pump SCP1, which is farther from the second coolant pump HTP2, has a discharge pressure relatively higher than the coolant pump discharge pressure, forming a forward flow path, the first shutdown cooling pump SCP1 is operated while the second coolant pump HTP2 is in operation.

When the second coolant pump HTP2 and the first shutdown cooling pump SCP1 are operated, the following flow paths are formed. In the description below, symbols ③, ④, ③-1, ③-2, ③-3, and ③-4 are added to distinguish the decontaminant branched at each junction point.

The decontaminant flows from the second coolant pump HTP2 to the junction point 11d.

At the junction point 11d, some of the decontaminant, ③, flows through the reactor 90 to the junction point 11b. At the junction point 11d, some of the decontaminant, ④, flows to the second shutdown cooling system piping 22 from the junction point 11d.

Some of the decontaminant ③ that reaches the junction point 11b, ③-1, flows toward the first steam generator SG1, and through the reactor 90 to the junction point 11c.

On the other hand, some of the decontaminant at the junction point 11b, ③-2, flows to the first shutdown cooling system piping 21, and through the first shutdown cooling pump SCP1 to the junction point 11a. It then flows through the reactor 90 to the junction point 11c and the second coolant pump HTP2.

Additionally, the decontaminant branched from the junction point 11b, ③-2, reaches the junction point 41a, where some of this decontaminant, ③-3, flows to the junction point 11a and the second coolant pump HTP2. Some of the decontaminant at the junction point 41a, ③-4, flows through the first coolant purification system piping 41 and the waste liquid decomposition device 80 to the junction point 41b, the first coolant pump HTP1, the reactor 90, the junction point 11c, and the second coolant pump HTP2. At this time, the purification flow rate is formed utilizing the head of the first shutdown cooling pump SCP1.

FIG. 4 is a diagram for explaining a decontamination method for a nuclear power plant according to another embodiment of the present invention. FIG. 4 explains the decontamination of all the system piping (12, 23, 24, and 42) of the second loop Loop2.

Referring to FIG. 4, to decontaminate the second loop Loop2, the third coolant pump HTP3 and the second shutdown cooling pump SCP2 are operated.

When the third coolant pump HTP3 and the second shutdown cooling pump SCP2 are operated, the following flow paths are formed. In the description below, symbols ⑤, ⑤-1, ⑤-2, ⑥, ⑥-1, and ⑥-2 are added to distinguish the decontaminant branched at each junction point.

The decontaminant flows from the third coolant pump HTP3 to the junction point 12a.

At the junction point 12a, some of the decontaminant, ⑤, flows through the reactor 90 to the junction point 12c. At the junction point 12a, some of the decontaminant, ⑥, flows to the third shutdown cooling system piping 23 from the junction point 12a.

Some of the decontaminant ⑤ that reaches the junction point 12c, ⑤-1, flows toward the fourth steam generator SG4, and through the reactor 90 to the junction point 12b.

On the other hand, some of the decontaminant at the junction point 12c, ⑤-2, flows to the fourth shutdown cooling system piping 24, and through the second shutdown cooling pump SCP2 to the junction point 12d. It then flows through the reactor 90 to the junction point 12b and the third coolant pump HTP3.

Additionally, the decontaminant branched from the junction point 12a, ⑥, reaches the junction point 42a, where some of this decontaminant, ⑥-1, flows through the first shutdown cooling pump SCP1 to the junction point 12b and the third coolant pump HTP3. Some of the decontaminant at the junction point 42a, ⑥-2, flows through the second coolant purification system piping 42 and the waste liquid decomposition device 80 to the junction point 42b and the third coolant pump HTP3. At this time, the purification flow rate is formed using the head of the third coolant pump HTP3.

FIG. 5 is a diagram for explaining a decontamination method for a nuclear power plant according to another embodiment of the present invention. FIG. 5 explains the decontamination of all the system piping (12, 23, 24, and 42) of the second loop Loop2.

Referring to FIG. 5, to decontaminate the second loop Loop2, the fourth coolant pump HTP4 and the first shutdown cooling pump SCP1 are operated.

When the fourth coolant pump HTP4 and the first shutdown cooling pump SCP1 are operated, the following flow paths are formed. In the description below, symbols ⑦, ⑧, ⑦-1, ⑦-2, ⑦-3, and ⑦-4 are added to distinguish the decontaminant branched at each junction point.

The decontaminant flows from the fourth coolant pump HTP4 to the junction point 12d.

At the junction point 12d, some of the decontaminant, ⑦, flows through the reactor 90 to the junction point 12b. At the junction point 12d, some of the decontaminant, ⑧, flows to the fourth shutdown cooling system piping 24 from the junction point 12d.

Some of the decontaminant ⑦ that reaches the junction point 12b, ⑦-1, flows toward the third steam generator SG3, and through the reactor 90 to the junction point 12c.

On the other hand, some of the decontaminant at the junction point 12b, ⑦-2, flows to the third shutdown cooling system piping 23, and through the first shutdown cooling pump SCP1 to the junction point 42a.

At the junction point 42a, some of the decontaminant, ⑦-3, flows through the junction point 12a and the reactor 90 to the junction point 12c and the second coolant pump HTP4.

At the junction point 42a, some of the decontaminant, ⑦-4, flows through the second coolant purification system piping 42 and the waste liquid decomposition device 80 to the junction point 42b, the third coolant pump HTP3, the reactor 90, the junction point 12c, and the fourth coolant pump HTP4. At this time, the purification flow rate is formed using the head of the first shutdown cooling pump SCP1.

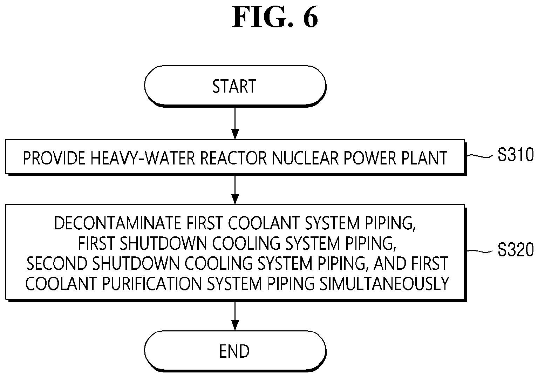

FIG. 6 is a flowchart for explaining the decontamination method according to some embodiments of the present invention. For the convenience of explanation, the decontamination method of FIG. 2 (for Loop1) will hereinafter be described.

Referring to FIG. 6, first, a heavy-water reactor nuclear power plant is provided (S310).

Specifically, as explained earlier with reference to FIG. 1, the heavy-water reactor nuclear power plant includes a reactor 90, a first coolant pump HTP1, which is disposed on one side of the reactor 90, a second coolant pump HTP2, which is disposed on the other side of the reactor 90, first coolant system piping 11, which passes through the reactor 90 and connects the first coolant pump HTP1 and the second coolant pump HTP2, a first shutdown cooling pump SCP1, which is disposed on one side of the reactor 90, first shutdown cooling system piping 21, which branches from the first coolant system piping 11 at the downstream end of the first coolant pump HTP1 and is connected to the upstream end of the first coolant pump HTP1 through the first shutdown cooling pump SCP1, a second shutdown cooling pump SCP2, which is disposed on the other side of the reactor 90, and second shutdown cooling system piping 22, which branches from the first coolant system piping 11 at the downstream end of the second coolant pump HTP2 and is connected to the upstream end of the second coolant pump HTP2 through the second shutdown cooling pump SCP2.

Thereafter, as illustrated in FIG. 2, the first loop Loop1 may be decontaminated by operating the first coolant pump HTP1 and the second shutdown cooling pump SCP2, and stopping the second coolant pump HTP2 and the first shutdown cooling pump SCP1.

Alternatively, as illustrated in FIG. 3, the first loop Loop1 may be decontaminated by operating the second coolant pump HTP2 and the first shutdown cooling pump SCP1.

Alternatively, as illustrated in FIG. 4, the second loop Loop2 may be decontaminated by operating the third coolant pump HTP3 and the second shutdown cooling pump SCP2.

Alternatively, as illustrated in FIG. 5, the second loop Loop2 may be decontaminated by operating the fourth coolant pump HTP4 and the first shutdown cooling pump SCP1.

Although the embodiments of the present invention have been described above with reference to the accompanying drawings, those skilled in the art will understand that the present invention can be implemented in other specific forms without changing its technical spirit or essential features. Therefore, the embodiments described above should be understood as illustrative rather than restrictive in all respects.

## Claims

1. A nuclear power plant comprising:
a reactor;
a first coolant pump disposed on one side of the reactor, a second coolant pump disposed on the other side of the reactor, and first coolant system piping passing through the reactor and connecting the first coolant pump and the second coolant pump;
a first shutdown cooling pump disposed on one side of the reactor, and first shutdown cooling system piping branching from the first coolant system piping at a downstream end of the first coolant pump and connected to an upstream end of the first coolant pump through the first shutdown cooling pump; and
a second shutdown cooling pump disposed on the other side of the reactor, and second shutdown cooling system piping branching from the first coolant system piping at a downstream end of the second coolant pump and connected to an upstream end of the second coolant pump through the second shutdown cooling pump,
wherein the first coolant system piping, the first shutdown cooling system piping, and the second shutdown cooling system piping are decontaminated simultaneously by operating the first coolant pump and the second shutdown cooling pump and stopping the second coolant pump and the first shutdown cooling pump.

2. The nuclear power plant of claim 1, further comprising:
a waste liquid decomposition device, and first coolant purification system piping branching from the first shutdown cooling system piping at the downstream end of the first coolant pump and connected to the upstream end of the first coolant pump through the waste liquid decomposition device,
wherein the first coolant system piping, the first shutdown cooling system piping, the second shutdown cooling system piping, and the first coolant purification system piping are decontaminated simultaneously by operating the first coolant pump and the second shutdown cooling pump and stopping the second coolant pump and the first shutdown cooling pump.

3. The nuclear power plant of claim 2, wherein a flow rate within the first coolant purification system piping is formed by a head of the first coolant pump.

4. The nuclear power plant of claim 1, further comprising:
a third coolant pump disposed on one side of the reactor, a fourth coolant pump disposed on the other side of the reactor, and second coolant system piping passing through the reactor and connecting the third coolant pump and the fourth coolant pump;
third shutdown cooling system piping branching from the second coolant system piping at a downstream end of the third coolant pump and connected to an upstream end of the third coolant pump through the first shutdown cooling pump; and
fourth shutdown cooling system piping branching from the second coolant system piping at a downstream end of the fourth coolant pump and connected to an upstream end of the fourth coolant pump through the second shutdown cooling pump.

5. A nuclear power plant comprising:
a reactor;
a first coolant pump disposed on one side of the reactor, a second coolant pump disposed on the other side of the reactor, and first coolant system piping passing through the reactor and connecting the first coolant pump and the second coolant pump;
a first shutdown cooling pump disposed on one side of the reactor, and first shutdown cooling system piping branching from the first coolant system piping at a downstream end of the first coolant pump and connected to an upstream end of the first coolant pump through the first shutdown cooling pump;
a second shutdown cooling pump disposed on the other side of the reactor, and second shutdown cooling system piping branching from the first coolant system piping at a downstream end of the second coolant pump and connected to an upstream end of the second coolant pump through the second shutdown cooling pump; and
a waste liquid decomposition device, and first coolant purification system piping branching from the first shutdown cooling system piping at the downstream end of the first coolant pump and connected to the upstream end of the first coolant pump through the waste liquid decomposition device,
wherein the first coolant system piping, the first shutdown cooling system piping, the second shutdown cooling system piping, and the first coolant purification system piping are decontaminated simultaneously by operating the second coolant pump and the first shutdown cooling pump and stopping the first coolant pump and the second shutdown cooling pump.

6. The nuclear power plant of claim 5, wherein a flow rate within the first coolant purification system piping is formed by a head of the first shutdown cooling pump.

7. A decontamination method for a nuclear power plant, comprising:
providing the nuclear power plant, the nuclear power plant including:
a reactor, a first coolant pump disposed on one side of the reactor, a second coolant pump disposed on the other side of the reactor, and first coolant system piping passing through the reactor and connecting the first coolant pump and the second coolant pump;
a first shutdown cooling pump disposed on one side of the reactor, and first shutdown cooling system piping branching from the first coolant system piping at a downstream end of the first coolant pump and connected to an upstream end of the first coolant pump through the first shutdown cooling pump; and
a second shutdown cooling pump disposed on the other side of the reactor, and second shutdown cooling system piping branching from the first coolant system piping at a downstream end of the second coolant pump and connected to an upstream end of the second coolant pump through the second shutdown cooling pump,
wherein the first coolant system piping, the first shutdown cooling system piping, the second shutdown cooling system piping, and the first coolant purification system piping are decontaminated simultaneously by operating the first coolant pump and the second shutdown cooling pump and stopping the second coolant pump and the first shutdown cooling pump.

8. The decontamination method of claim 7, wherein
the nuclear power plant further includes a waste liquid decomposition device, and first coolant purification system piping branching from the first shutdown cooling system piping at the downstream end of the first coolant pump and connected to the upstream end of the first coolant pump through the waste liquid decomposition device, and
the first coolant system piping, the first shutdown cooling system piping, the second shutdown cooling system piping, and the first coolant purification system piping are decontaminated simultaneously by operating the first coolant pump and the second shutdown cooling pump and stopping the second coolant pump and the first shutdown cooling pump.
